(19) Europäisches Patentamt
European Patent Office
Office européen des brevets

(11) **EP 3 646 184 B1**

(12) **EUROPÄISCHE PATENTSCHRIFT**

(45) Veröffentlichungstag und Bekanntmachung des Hinweises auf die Patenterteilung:
**15.09.2021   Patentblatt 2021/37**

(21) Anmeldenummer: **18720563.8**

(22) Anmeldetag: **23.04.2018**

(51) Int Cl.:
***G06F 11/18*** *(2006.01)*

(86) Internationale Anmeldenummer:
**PCT/EP2018/060327**

(87) Internationale Veröffentlichungsnummer:
**WO 2019/001796 (03.01.2019 Gazette 2019/01)**

(54) **VERFAHREN, VORRICHTUNG UND COMPUTERLESBARES SPEICHERMEDIUM MIT INSTRUKTIONEN ZUM AUFLÖSEN EINER REDUNDANZ VON ZWEI ODER MEHR REDUNDANTEN MODULEN**

METHOD, APPARATUS AND COMPUTER-READABLE STORAGE MEDIUM HAVING INSTRUCTIONS FOR CANCELLING A REDUNDANCY OF TWO OR MORE REDUNDANT MODULES

PROCÉDÉ, DISPOSITIF ET SUPPORT D'ENREGISTREMENT POUVANT ÊTRE LU PAR UN ORDINATEUR POURVU D'INSTRUCTIONS POUR LA RÉSOLUTION D'UNE REDONDANCE DE DEUX MODULES REDONDANTS OU PLUS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.06.2017   DE 102017210955**

(43) Veröffentlichungstag der Anmeldung:
**06.05.2020   Patentblatt 2020/19**

(73) Patentinhaber: **Volkswagen Aktiengesellschaft 38440 Wolfsburg (DE)**

(72) Erfinder:
- **SCHLICHT, Peter
  38442 Wolfsburg (DE)**
- **HÜGER, Fabian
  38302 Wolfenbüttel (DE)**

(56) Entgegenhaltungen:
**EP-A2- 0 366 017     WO-A2-01/80009**

**Beschreibung**

Die vorliegende Erfindung betrifft ein Verfahren, eine Vorrichtung und ein computerlesbares Speichermedium mit Instruktionen zum Auflösen einer Redundanz von zwei oder mehr redundanten Modulen.

Heutige Kraftfahrzeuge weisen regelmäßig eine Vielzahl von Assistenzsystemen auf, die den Fahrer beim Führen des Kraftfahrzeugs unterstützen. Zunehmend kommen dabei teilautonome oder autonome Systeme zum Einsatz, die eine teil- oder vollautomatisierte Fahrt des Kraftfahrzeugs ermöglichen.

Neue Generationen von Assistenzsystemen ermöglichen eine immer größere Auswahl automatisiert durchführbarer Fahrmanöver sowie eine zunehmende Komplexität dieser Fahrmanöver. Für derartige Funktionen sind regelmäßig Daten erforderlich, die die für die Durchführung der Funktionen notwendigen Informationen beinhalten. Derartige Daten werden typischerweise durch Fahrzeugsensoren erfasst.

In diesem Zusammenhang beschreibt die DE 10 2008 013 366 A1 ein Verfahren zur Bereitstellung von Information für Fahrerassistenzsysteme. Zunächst werden durch Umfeldsensoren periodisch Messdaten erfasst. Aus den aktuellen und vergangenen Werten der Messdaten werden sodann Messdatenmerkmale abgeleitet. Anhand der abgeleiteten Messdatenmerkmale wird eine erste Zuordnung durchgeführt, bei der den Messdaten der einzelnen Umfeldsensoren jeweils zumindest eine von mehreren möglichen Messdatenhypothesen zugeordnet wird. Mindestens eine der möglichen Messdatenhypothesen betrifft dabei die Relevanz der Messdaten für ein bereits zuvor detektiertes Objekt in der Fahrzeugumgebung. Anschließend wird eine zweite Zuordnung durchgeführt, bei der Messdaten zumindest zweier Umfeldsensoren, die gemäß der ersten Zuordnung Relevanz für ein bestimmtes Objekt in der Fahrzeugumgebung besitzen, diesem Objekt zugeordnet werden. In Abhängigkeit von dieser zweiten Zuordnung wird eine Objekthypothese angepasst, die mehrere Objekteigenschaften des Objekts umfasst. Diese Objekthypothese kann schließlich dem Fahrerassistenzsystem als Information zur Verfügung gestellt werden.

Oftmals besteht jedoch Ungewissheit darüber, ob die momentan verfügbaren Daten ausreichend sicher und zuverlässig sind, beispielsweise aufgrund von Sensordefekten oder Unzulänglichkeiten bei der Übertragung der Daten im Kommunikationsnetzwerk des Fahrzeugs.

Vor diesem Hintergrund beschreibt die WO 2014/033172 A1 ein Verfahren zum Durchführen einer Sicherheitsfunktion eines Fahrzeugs. Mittels mindestens eines Kommunikationssystems werden Daten, die für das Durchführen der Sicherheitsfunktion erforderlich sind, auf eine Steuereinheit des Fahrzeugs übertragen. Mittels der Steuereinheit werden in Abhängigkeit von den übertragenen Daten Steuersignale erzeugt und auf eine Funktionseinheit des Fahrzeugs übertragen. Mittels der Funktionseinheit wird die Sicherheitsfunktion in Abhängigkeit von den Steuersignalen durchgeführt. Außerdem werden Diagnosetests in zeitlichen Abständen wiederholt durchgeführt, wobei mit den Diagnosetests überprüft wird, ob in einem oder in mehreren zum Durchführen dieses Verfahrens verwendeten elektrischen, elektronischen und / oder programmierbaren Systemen eine Störung besteht oder ein Fehler aufgetreten ist, die oder die die Durchführung der Sicherheitsfunktion oder sicherheitsrelevante Daten beeinträchtigen kann. Mittels des Kommunikationssystems werden zudem Metadaten der Daten an die Steuereinheit übertragen, wobei die Metadaten Informationen über zumindest eines der zum Durchführen des Verfahrens verwendeten elektrischen, elektronischen und/oder programmierbaren Systeme beinhalten.

Im Rahmen des automatischen Fahrens ist die Nutzung von Redundanz als Sicherheitsmaßnahme unerlässlich. Dabei muss zur Laufzeit entschieden werden, welches der redundant verfügbaren Module aktiviert wird.

Bisher bekannte Redundanzsysteme arbeiten meist nach dem Master-Slave-Prinzip, bei dem ein Hauptstrang die eigentliche Funktion übernimmt und nur im Falle eines großen Sicherheitsproblems oder eines Komponentenausfalls auf eine sichere Rückfallebene umgeschaltet wird.

Der klassische Master-Slave-Redundanzansatz eignet sich sehr gut für deterministische Systeme, deren Qualität von konstanter Güte ist und die nur durch einen Systemausfall abgelöst werden. Bei diesem Ansatz operiert ein statisches System als hauptsächlich ausführender Agent. Die Rückfallebene arbeitet zwar die gesamte Zeit (passiv) mit, um im Notfall korrekt eingreifen zu können, bleibt aber ansonsten unberücksichtigt.

Vor diesem Hintergrund beschreibt WO 01/80009 A2 ein fehlertolerantes Computersystem. Das Computersystem umfasst zwei Zentraleinheiten (CPUs), die im wesentlichen identische Datenausgabeströme erzeugen, einen Verzögerungspuffer mit einem ersten FIFO-Puffer und einem zweiten FIFO-Puffer und ein E/A-Modul, das mit den CPUs verbunden ist. Das E/A-Modul umfasst einen Komparator zum bitweisen Vergleich der CPU-Datenausgangsströme. Der erste CPU-Datenausgangsstrom wird an Peripheriegeräte übertragen, wenn beide CPU-Ausgänge im Wesentlichen identisch bleiben. Andernfalls, wenn der Komparator Unterschiede anzeigt, werden die Daten der ersten und zweiten CPU in der Warteschlange an den ersten bzw. zweiten FIFO-Puffer weitergeleitet, und die nachfolgenden Daten werden in den entsprechenden CPU-Puffern aufbewahrt. Während die CPUs die Verarbeitung fortsetzen, versuchen laufende Diagnoseverfahren, die eine oder andere der CPUs als fehlerhaft und die verbleibende CPU als korrekt funktionierend zu identifizieren. Wenn die resultierende Diagnose nicht schlüssig ist, wird die CPU mit der niedrigeren Fehlerkorrekturrate als korrekt funktionierend identifiziert.

EP 0 366 017 A2 beschreibt ein fehlertolerantes System, das eine Vielzahl von redundanten Subsystemen umfasst. Bei dem System werden den Subsystemen Eingangssignale zugeführt. Ausgangssignale der Subsysteme werden einer Ausgangsauswahlschaltung zugeführt. Durch die Subsysteme werden jeweils eine Selbstdiagnose und Datenvergleiche zwischen den Subsystemen durchgeführt. Die Ausgangsauswahlschaltung gibt basierend auf Ausgangssignalen von den Subsystemen ein ausgewähltes Signal durch Mehrheitsentscheidung aus.

Allerdings sind datengetriebene (intelligente) Ansätze flexibler. Es bieten sich situations-, lokalitäts- oder kontextspezifische Modelle an, die in bestimmten Situationen ein erlerntes, optimales Verhalten anbieten. Der klassische Redundanzansatz ist für solche Systeme allerdings zu unflexibel in Bezug auf die Tatsache, dass die redundanten Systeme überwiegend abweichende Ausgaben haben. Situationsabhängig führen zudem unterschiedliche datengetriebene Ansätze zu besseren Ergebnissen, so dass sich kein stets zu bevorzugender Master definieren lässt.

Es ist eine Aufgabe der Erfindung, Lösungen zum Auflösen einer Redundanz von Entscheidungen von zwei oder mehr redundanten Modulen aufzuzeigen, die für datengetriebene Module geeignet sind.

Diese Aufgabe wird durch ein Verfahren mit den Merkmalen des Anspruchs 1, durch ein computerlesbares Speichermedium mit Instruktionen gemäß Anspruch 10 und durch eine Vorrichtung mit den Merkmalen des Anspruchs 11 gelöst. Bevorzugte Ausgestaltungen der Erfindung sind Gegenstand der abhängigen Ansprüche.

Gemäß einem ersten Aspekt der Erfindung umfasst ein Verfahren zum Auflösen einer Redundanz von zwei oder mehr redundanten datengetrieben trainierten Modulen die Schritte:

- Empfangen von Ergebnissen der zwei oder mehr redundanten Module;
- Ermitteln von Verlässlichkeiten der Ergebnisse durch Messungen oder Untersuchungen an den Modulen;
- Bestimmen eines Gesamtergebnisses aus den Ergebnissen basierend auf den ermittelten Verlässlichkeiten;
- Ermitteln einer Ergebnisverlässlichkeit für das Gesamtergebnis aus den Verlässlichkeiten der Ergebnisse; und
- Ausgeben des Gesamtergebnisses und der Ergebnisverlässlichkeit für das Gesamtergebnis für eine Weiterverarbeitung.

Gemäß einem weiteren Aspekt der Erfindung enthält ein computerlesbares Speichermedium Instruktionen, die bei Ausführung durch einen Computer den Computer zur Ausführung der folgenden Schritte zum Auflösen einer Redundanz von zwei oder mehr redundanten datengetrieben trainierten Modulen veranlassen:

- Empfangen von Ergebnissen der zwei oder mehr redundanten Module;
- Ermitteln von Verlässlichkeiten der Ergebnisse durch Messungen oder Untersuchungen an den Modulen;
- Bestimmen eines Gesamtergebnisses aus den Ergebnissen basierend auf den ermittelten Verlässlichkeiten;
- Ermitteln einer Ergebnisverlässlichkeit für das Gesamtergebnis aus den Verlässlichkeiten der Ergebnisse; und
- Ausgeben des Gesamtergebnisses und der Ergebnisverlässlichkeit für das Gesamtergebnis für eine Weiterverarbeitung.

Der Begriff Computer ist dabei breit zu verstehen. Insbesondere umfasst er auch Steuergeräte und andere prozessorbasierte Datenverarbeitungsvorrichtungen.

Gemäß einem weiteren Aspekt der Erfindung weist eine Vorrichtung zum Auflösen einer Redundanz von zwei oder mehr redundanten datengetrieben trainierten Modulen auf:

- eine Empfangseinheit zum Empfangen von Ergebnissen der zwei oder mehr redundanten Module;
- eine Prozessoreinheit zum Bestimmen eines Gesamtergebnisses aus den Ergebnissen unter Berücksichtigung von für die Ergebnisse durch Messungen oder Untersuchungen an den Modulen ermittelten Verlässlichkeiten und zum Ermitteln einer Ergebnisverlässlichkeit für das Gesamtergebnis aus den Verlässlichkeiten der Ergebnisse; und
- eine Ausgabeeinheit zum Ausgeben des Gesamtergebnisses und der Ergebnisverlässlichkeit für das Gesamtergebnis für eine Weiterverarbeitung.

Sobald man Redundanz in den verschiedenen Verarbeitungsschritten zwischen Wahrnehmung und Fahrmanöver einführt, bietet es sich an, häufig und auf Modulebene zu entscheiden, welche der redundant verfügbaren Module aktiviert werden. Erfindungsgemäß wird bei redundant verfügbaren Modulen zur Laufzeit auf die plausiblere der redundant vorhandenen Informationen vertraut. Die Rückfallebene arbeitet somit nicht nur passiv mit, sondern sie kann jederzeit auch aktiviert und zur Grundlage der aktuellen Entscheidungen werden. Für jedes datenbasierte Modul, z. B. ein künstliches neuronales Netz oder andere trainierte Modelle, wird dazu zur Laufzeit eine Verlässlichkeit der aktuell ausgegebenen Information bestimmt. Redundant auftretende Module, die die gleiche Funktion erfüllen, werden dann anhand ihrer Ergebnisse und der ermittelten Verlässlichkeit bewertet. Anstelle des Begriffs der Verlässlichkeit wird in der Literatur häufig der Begriff der Unsicherheitswerte verwendet. Diese Begriffe sind äquivalent, es gilt Verlässlichkeit = 1 - Unsicherheitswert. Bisherige Versuche des Vergleichens von verschiedenen datengetriebenen Ansätzen basieren auf modellintrinsischen Konfidenzen. Allerdings gibt es eindrückliche Beispiele von Systemen, die falsche Ergebnisse mit hoher Konfidenz ausgeben. Die Konfidenz alleine kann daher ein schlechter Indikator für das Auflösen von Redundanz sein. Diesem Umstand wird durch die Bestimmung der Verlässlichkeit Rechnung getragen.

Der Umgang mit widersprüchlichen Informationen und die Auflösung von Redundanz in komplexen Systemen ist von zentraler Bedeutung. Die beschriebene Lösung bietet eine generische Möglichkeit, eine solche Redundanzauflösung auch für modulare, datengetriebene Ansätze zum automatischen Fahren zu verfolgen. Dabei können Vorteile und Stärken einzelner Module gegeneinander ausgespielt werden, was bei einem klassischen Master-Slave-Ansatz deutlich schlechter darstellbar ist. Zudem ist die externe Bewertung der Unsicherheit einer Modulentscheidung flexibel. Dadurch lässt sich eine Optimierung des Fahrverhaltens automatischer Fahrzeuge leichter darstellen als mit starren Ansätzen.

Erfindungsgemäß wird zusätzlich zum Gesamtergebnis eine Ergebnisverlässlichkeit für das Gesamtergebnis ausgegeben. Diese ermöglicht eine Bewertung des ausgegebenen Gesamtergebnisses im Rahmen der weiteren Verarbeitung. Beispielsweise kann so erfasst werden, ob die Ergebnisverlässlichkeit ausreichend hoch ist, um das Gesamtergebnis für eine Weiterverarbeitung in Betracht zu ziehen.

Gemäß einem Aspekt der Erfindung wird als Gesamtergebnis dasjenige Ergebnis mit der höchsten Verlässlichkeit ausgegeben. Dieser Ansatz stellt die einfachste Möglichkeit dar, ein Gesamtergebnis zu bestimmen. Der erforderliche Rechenaufwand für die Bestimmung des Gesamtergebnisses ist damit auf ein Minimum beschränkt.

Gemäß einem Aspekt der Erfindung wird die Verlässlichkeit des Ergebnisses eines Moduls auf Grundlage zumindest eines der folgenden Indikatoren ermittelt: eine Robustheit des Moduls gegenüber Veränderungen an den Eingangsgrößen; eine Robustheit des Moduls gegenüber Veränderungen von Modulparametern; eine Lokalität von Entscheidungsgrundlagen des Moduls; ein vom Modul in einem vorherigen Zeitschritt ermitteltes Ergebnis; ein für das Modul in einem vorherigen Zeitschritt ermittelter Indikator. Alle diese Indikatoren bieten sich für das Messen der Verlässlichkeit an, sie lassen sich zudem mit vertretbarem Rechenaufwand zur Laufzeit ermitteln. Insbesondere Kombinationen der Indikatoren erlauben es, die Verlässlichkeit zuverlässig zu ermitteln.

Gemäß einem Aspekt der Erfindung werden beim Ermitteln der Verlässlichkeiten der Ergebnisse Gesamtverlässlichkeiten der zwei oder mehr redundanten Module ermittelt. Die Gesamtverlässlichkeit eines Moduls vereint die verschiedenen, auf unterschiedliche Weise für ein Modul ermittelten Verlässlichkeiten, zu einem Gesamtergebnis. Aus den ermittelten Werten der Verlässlichkeit wird dazu eine momentane Gesamtverlässlichkeit berechnet und der aktuellen Berechnung des aktiven Moduls zugeordnet.

Gemäß einem Aspekt der Erfindung wird bei zwei oder mehr Ergebnissen mit der höchsten Verlässlichkeit eine Priorisierung der zwei oder mehr redundanten Module berücksichtigt. Auf diese Weise kann gewährleistet werden, dass bevorzugt als glaubwürdiger geltende Module ihre Ergebnisse mit der entsprechenden Ergebnisverlässlichkeit weitergeben.

Gemäß einem Aspekt der Erfindung ist die Priorisierung der zwei oder mehr redundanten Module kontextspezifisch anpassbar, beispielsweise in Hinblick auf Ort, Zeit, Wetter, Verkehr oder Umgebung. So kann berücksichtigt werden, dass die Module je nach gegebenem Kontext unterschiedlich glaubwürdig sein können. Beispielsweise kann ein Modul, dass auf einer Bildverarbeitung basiert, bei Tageslicht eine sehr hohe Glaubwürdigkeit, bei Dunkelheit hingegen eine eher geringe Glaubwürdigkeit aufweisen.

Gemäß einem Aspekt der Erfindung werden Aktivitätsparameter der zwei oder mehr redundanten Module gemessen. Bei zwei oder mehr Ergebnissen mit der höchsten Verlässlichkeit werden dabei aktive Module beim Bestimmen des Gesamtergebnisses bevorzugt. Diese Aktivitätsparameter sagen aus, wie aktiv jedes Modul in der vorhergehenden Zeit war und beziehen Verlässlichkeit, Präzision und die Frage, wie häufig diesen Modulen vertraut wurde, mit ein. Dabei hat vorzugsweise die unmittelbare Vergangenheit einen starken, die Langzeiterfahrung einen kleinen Einfluss. Auf diese Weise wird eine gewisse Konstanz bei der Bestimmung des Gesamtergebnisses erreicht, d. h. es wird fortwährend zwischen den Ergebnissen der redundanten Module gewechselt.

Gemäß einem Aspekt der Erfindung werden intrinsische Unsicherheiten der zwei oder mehr redundanten Module erfasst. Bei zwei oder mehr Ergebnissen mit der höchsten Verlässlichkeit werden dabei Module mit geringerer intrinsischer Unsicherheit beim Bestimmen des Gesamtergebnisses bevorzugt. Auch wenn die intrinsische Unsicherheit, d. h. die Konfidenz, alleine ein schlechter Indikator für das Auflösen von Redundanz sein kann, ist sie im Zusammenspiel mit der Verlässlichkeit durchaus geeignet, um Situationen mit mehreren Ergebnissen mit der höchsten Verlässlichkeit aufzulösen.

Gemäß einem Aspekt der Erfindung wird das Gesamtergebnis durch eine zu den ermittelten Verlässlichkeiten proportionale Interpolierung der Ergebnisse bestimmt. Sind die Ergebnisse interpolierbar, so kann anhand der vorhandenen Ergebnisse ein Gesamtergebnis als Interpolation der Modulergebnisse ermittelt werden. Auf diese Weise tragen alle ermittelten Ergebnisse in einem gewissen Umfang zum Gesamtergebnis bei. Vorzugsweise erhalten die Einzelergebnisse ein zur Ergebnisverlässlichkeit proportionales Gewicht. So ist sichergestellt, dass Ergebnisse mit hoher Ergebnisverlässlichkeit mit einem größeren Gewicht zum Gesamtergebnis beitragen.

Vorzugsweise werden ein erfindungsgemäßes Verfahren oder eine erfindungsgemäße Vorrichtung in einem Fahrzeug, insbesondere einem Kraftfahrzeug, eingesetzt. Daneben spielen Redundanzkonzepte in vielen autonomen Systemen wie der Robotik, Luft- und Raumfahrt, Produktion oder der Sicherheitsüberwachung wie der Reaktorsicherheit eine zentrale Rolle. Die beschriebene Lösung zur Redundanzauflösung bietet sich auch für derartige Systeme an, sofern dort an datengetriebene Ansätze in redundanter Form zum Einsatz kommen.

Weitere Merkmale der vorliegenden Erfindung werden aus der nachfolgenden Beschreibung und den angehängten Ansprüchen in Verbindung mit den Figuren ersichtlich.

Fig. 1    zeigt schematisch ein Verfahren zum Auflösen einer Redundanz von zwei oder mehr redundanten Modulen;

Fig. 2    zeigt eine erste Ausführungsform einer Vorrichtung zum Auflösen einer Redundanz von zwei oder mehr redundanten Modulen;

Fig. 3    zeigt eine zweite Ausführungsform einer Vorrichtung zum Auflösen einer Redundanz von zwei oder mehr redundanten Modulen;

Fig. 4    stellt schematisch ein Kraftfahrzeug dar, in dem eine erfindungsgemäße Lösung realisiert ist;

Fig. 5    zeigt schematisch ein System verschiedener Module, in dem basierend auf Eingangsgrößen ein Gesamtergebnis ermittelt wird; und

Fig. 6    verdeutlicht das Bestimmen eines Gesamtergebnisses aus den Einzelergebnissen zweier Module.

Zum besseren Verständnis der Prinzipien der vorliegenden Erfindung werden nachfolgend Ausführungsformen der Erfindung anhand der Figuren detaillierter erläutert. Es versteht sich, dass sich die Erfindung nicht auf diese Ausführungsformen beschränkt und dass die beschriebenen Merkmale auch kombiniert oder modifiziert werden können, ohne den Schutzbereich der Erfindung zu verlassen, wie er in den angehängten Ansprüchen definiert ist.

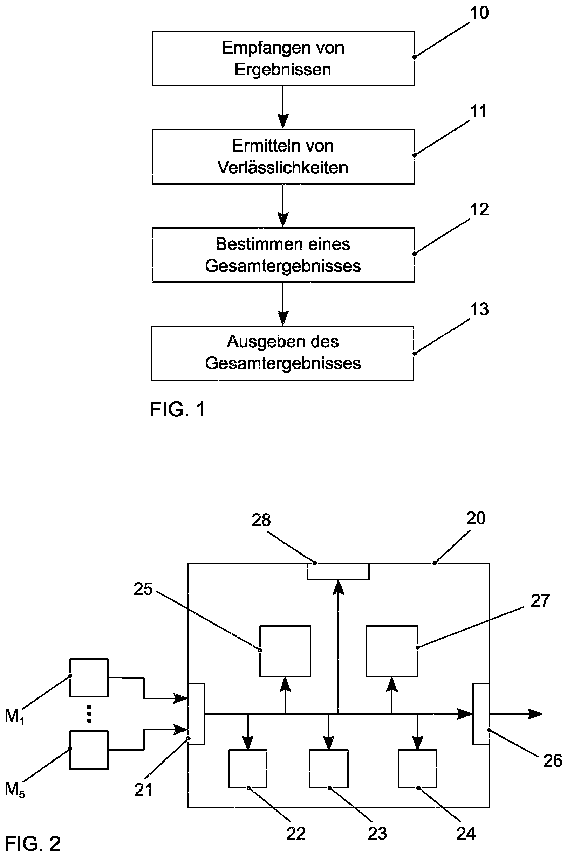

Fig. 1 zeigt schematisch ein Verfahren zum Auflösen einer Redundanz von zwei oder mehr redundanten Modulen. In einem ersten Schritt werden Ergebnisse der zwei oder mehr redundanten Module empfangen 10. Zusätzlich werden Verlässlichkeiten der Ergebnisse ermittelt 11. Basierend auf den ermittelten Verlässlichkeiten wird dann ein Gesamtergebnis aus den Ergebnissen bestimmt 12. Das so bestimmte Gesamtergebnis wird schließlich für eine Weiterverarbeitung ausgegeben 13. Zusätzlich zum Gesamtergebnis wird dabei eine Ergebnisverlässlichkeit ausgegeben.

Die Verlässlichkeit des Ergebnisses eines Moduls kann beispielsweise auf Grundlage zumindest eines der folgenden Indikatoren ermittelt werden: eine Robustheit des Moduls gegenüber Veränderungen an den Eingangsgrößen; eine Robustheit des Moduls gegenüber Veränderungen von Modulparametern; eine Lokalität von Entscheidungsgrundlagen des Moduls; ein vom Modul in einem vorherigen Zeitschritt ermitteltes Ergebnis; ein für das Modul in einem vorherigen Zeitschritt ermittelter Indikator. Zudem können beim Ermitteln der Verlässlichkeiten der Ergebnisse Gesamtverlässlichkeiten der zwei oder mehr redundanten Module ermittelt werden.

Als Gesamtergebnis kann beispielsweise dasjenige Ergebnis mit der höchsten Verlässlichkeit ausgegeben werden. Bei zwei oder mehr Ergebnissen mit der höchsten Verlässlichkeit kann dabei eine Priorisierung der zwei oder mehr redundanten Module berücksichtigt werden. Diese kann vorzugsweise kontextspezifisch anpassbar sein. Alternativ können Aktivitätsparameter der zwei oder mehr redundanten Module gemessen werden. Bei zwei oder mehr Ergebnissen mit der höchsten Verlässlichkeit werden dann aktive Module beim Bestimmen des Gesamtergebnisses bevorzugt. Ebenso können intrinsische Unsicherheiten der zwei oder mehr redundanten Module erfasst werden. Bei zwei oder mehr Ergebnissen mit der höchsten Verlässlichkeit werden dann Module mit geringerer intrinsischer Unsicherheit beim Bestimmen des Gesamtergebnisses bevorzugt. Das Gesamtergebnis kann zudem durch eine zu den ermittelten Verlässlichkeiten proportionale Interpolierung der Ergebnisse bestimmt werden.

Fig. 2 zeigt eine vereinfachte schematische Darstellung einer ersten Ausführungsform einer Vorrichtung 20 zum Auflösen einer Redundanz von zwei oder mehr redundanten Modulen. Die Vorrichtung 20 hat einen Eingang 21, über den zwei oder mehr redundante Module $M_1...M_5$ mit der Vorrichtung 20 verbunden sind. Eine Empfangseinheit 22 empfängt Ergebnisse der zwei oder mehr redundanten Module $M_1...M_5$. Eine Prozessoreinheit 23 zum bestimmt ein Gesamtergebnis aus den empfangenen Ergebnissen. Dabei berücksichtigt die Prozessoreinheit 23 für die Ergebnisse ermittelte Verlässlichkeiten. Die Verlässlichkeiten können dabei von den Modulen $M_1...M_5$ selbst, von der Prozessoreinheit 23 oder von zusätzlichen Komponenten ermittelt werden. Die zusätzlichen Komponenten können Bestandteil der Vorrichtung 20 sein, sie können aber auch außerhalb der Vorrichtung 20 angeordnet sein. Die Verlässlichkeit des Ergebnisses eines Moduls $M_1...M_5$ kann beispielsweise auf Grundlage zumindest eines der folgenden Indikatoren ermittelt werden: eine Robustheit des Moduls $M_1...M_5$ gegenüber Veränderungen an den Eingangsgrößen; eine Robustheit des Moduls $M_1...M_5$ gegenüber Veränderungen von Modulparametern; eine Lokalität von Entscheidungsgrundlagen des Moduls $M_1...M_5$; ein vom Modul $M_1...M_5$ in einem vorherigen Zeitschritt ermitteltes Ergebnis; ein für das Modul $M_1...M_5$ in einem vorherigen Zeitschritt ermittelter Indikator. Zudem können beim Ermitteln der Verlässlichkeiten der Ergebnisse Gesamtverlässlichkeiten der zwei oder mehr redundanten Module $M_1...M_5$ ermittelt werden. Eine Ausgabeeinheit 24 gibt des Gesamtergebnis für eine Weiterverarbeitung über einen Ausgang 26 der Vorrichtung 20 aus. Zusätzlich zum Gesamtergebnis kann dabei eine Ergebnisverlässlichkeit über den Ausgang 26 ausgegeben werden. Die Empfangseinheit 22, die Prozessoreinheit 23 und die Ausgabeeinheit 24 können von einer Kontrolleinheit 25 gesteuert werden. Über eine Benutzerschnittstelle 28 können gegebenenfalls Einstellungen der Empfangseinheit 22, der Prozessoreinheit 23, der Ausgabeeinheit 24 oder der Kontrolleinheit 25 geändert werden. Die in der Vorrichtung 20 anfallenden Daten, beispielsweise die von der Prozessoreinheit 23 oder der Ausgabeeinheit 24 generierten Daten, können in einem Speicher 27 der Vorrichtung 20 abgelegt werden, beispielsweise für eine spätere Auswertung oder für eine Nutzung durch die Komponenten der Vorrichtung 20. Die Empfangseinheit 22, die Prozessoreinheit 23, die Ausgabeeinheit 24 sowie die Kontrolleinheit 25 können als dezidierte Hardware realisiert sein, beispielsweise als integrierte Schaltungen. Natürlich können sie aber auch teilweise oder vollständig kombiniert oder als Software implementiert werden, die auf einem geeigneten Prozessor läuft, beispielsweise auf einer GPU. Der Eingang 21 und der Ausgang 26 können als getrennte Schnittstellen oder als eine kombinierte bidirektionale Schnittstelle implementiert sein.

Als Gesamtergebnis kann von der Prozessoreinheit 23 beispielsweise dasjenige Ergebnis mit der höchsten Verlässlichkeit bestimmt werden. Bei zwei oder mehr Ergebnissen mit der höchsten Verlässlichkeit kann die Prozessoreinheit 23 dabei eine Priorisierung der zwei oder mehr redundanten Module $M_1...M_5$ berücksichtigen. Diese kann vorzugsweise kontextspezifisch anpassbar sein. Alternativ können Aktivitätsparameter der zwei oder mehr redundanten Module $M_1...M_5$ gemessen werden. Bei zwei oder mehr Ergebnissen mit der höchsten Verlässlichkeit werden von der Prozessoreinheit 23 dann aktive Module $M_1...M_5$ beim Bestimmen des Gesamtergebnisses bevorzugt. Ebenso können intrinsische Unsicherheiten der zwei oder mehr redundanten Module $M_1...M_5$ erfasst werden. Bei zwei oder mehr Ergebnissen mit der höchsten Verlässlichkeit werden von der Prozessoreinheit 23 dann Module $M_1...M_5$ mit geringerer intrinsischer Unsicherheit beim Bestimmen des Gesamtergebnisses bevorzugt. Die Prozessoreinheit 23 kann das Gesamtergebnis zudem durch eine zu den ermittelten Verlässlichkeiten proportionale Interpolierung der Ergebnisse bestimmen.

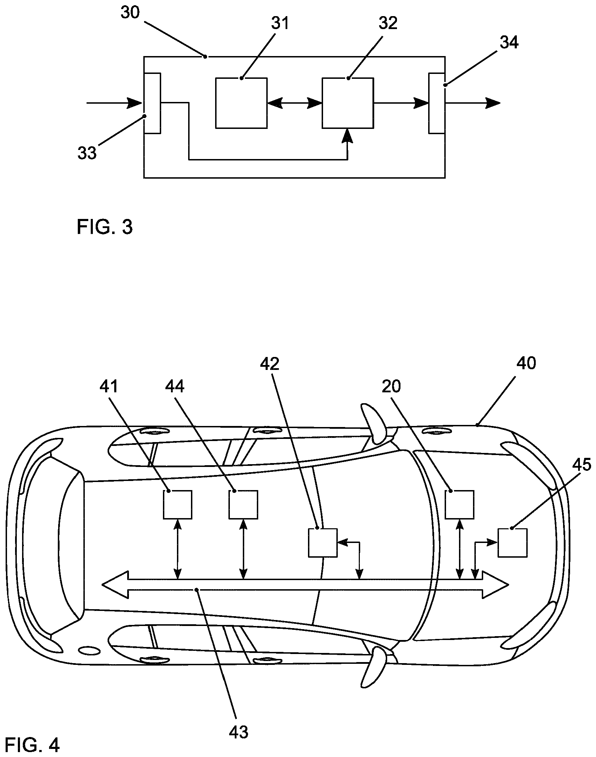

Fig. 3 zeigt eine vereinfachte schematische Darstellung einer zweiten Ausführungsform einer Vorrichtung 30 zum Auflösen einer Redundanz von zwei oder mehr redundanten Modulen. Die Vorrichtung 30 weist einen Prozessor 32 und einen Speicher 31 auf. Beispielsweise handelt es sich bei der Vorrichtung 30 um einen Computer oder ein Steuergerät. Im Speicher 31 sind Instruktionen abgelegt, die die Vorrichtung 30 bei Ausführung durch den Prozessor 32 veranlassen, die Schritte gemäß einem der beschriebenen Verfahren auszuführen. Die im Speicher 31 abgelegten Instruktionen verkörpern somit ein durch den Prozessor 32 ausführbares Programm, welches das erfindungsgemäße Verfahren realisiert. Die Vorrichtung 30 hat einen Eingang 33 zum Empfangen von Informationen, beispielsweise von Daten, die von einer Sensorik des Kraftfahrzeugs erfasst wurden. Vom Prozessor 32 generierte Daten werden über einen Ausgang 34 bereitgestellt. Darüber hinaus können sie im Speicher 31 abgelegt werden. Der Eingang 33 und der Ausgang 34 können zu einer bidirektionalen Schnittstelle zusammengefasst sein.

Der Prozessor 32 kann eine oder mehrere Prozessoreinheiten umfassen, beispielsweise Mikroprozessoren, digitale Signalprozessoren oder Kombinationen daraus.

Die Speicher 27, 31 der beschriebenen Ausführungsformen können sowohl volatile als auch nichtvolatile Speicherbereiche aufweisen und unterschiedlichste Speichergeräte und Speichermedien umfassen, beispielsweise Festplatten, optische Speichermedien oder Halbleiterspeicher.

Fig. 4 stellt schematisch ein Kraftfahrzeug 40 dar, in dem eine erfindungsgemäße Lösung realisiert ist. Das Kraftfahrzeug 40 weist unter anderem ein Navigationssystem 41 und eine Umgebungssensorik 42 auf, beispielsweise ein Kamerasystem und ein Radarsystem. Die von der Umgebungssensorik 42 erfassten Daten werden über ein Netzwerk 43 an eine Vorrichtung 20 zum Auflösen einer Redundanz von zwei oder mehr redundanten Modulen übermittelt. Die von der Vorrichtung 20 generierten Daten können in einem Speicher 44 des Kraftfahrzeugs 40 abgelegt werden. Zudem können sie einem Fahrerassistenzsystem 45 des Kraftfahrzeugs 40 zur Verfügung gestellt werden, beispielsweise für eine Bahnplanung. Weiterhin können die Daten dem Fahrer mittels einer Nutzerschnittstelle, beispielsweise einem Infotainmentsystem mit einer Anzeigevorrichtung, mitgeteilt werden.

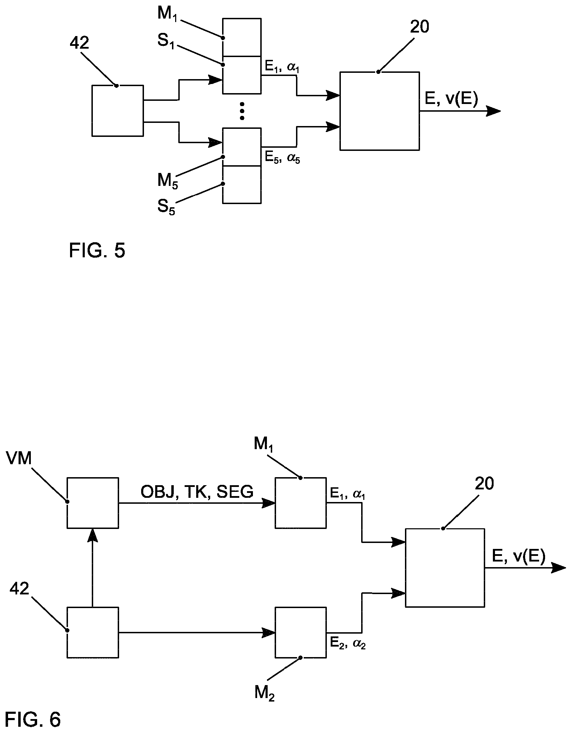

Nachfolgend soll eine bevorzugte Ausführungsform der Erfindung anhand der Figuren 5 und 6 erläutert werden.

Betrachtet wird das Zusammenspiel verschiedener neuartiger Softwarekomponenten, die auf bereits bestehenden technologischen Herangehensweisen beruhen. Diese Softwarekomponenten berechnen zum einen eine Unsicherheit eines konkreten Softwaremoduls entlang der Verarbeitungskette des automatischen Fahrens, d. h. von der Sensorik bis zur Aktorik. Zum anderen berechnen sie bei redundant auftretenden Modulen eine Ergebnisverlässlichkeit, um diese für die Auflösung der Redundanz zu verwenden. Im Sinne des konzeptionellen Vorgehens ist es sinnvoll, Ergebnisverlässlichkeiten für jedes Ergebnis zu ermitteln. In dem Fall, dass ein Ergebnis nur von einem Modul gegeben wird, kann deshalb die vom Modul ermittelte Verlässlichkeit als Ergebnisverlässlichkeit übernommen werden, gegebenenfalls mit einem grundsätzlichen Vertrauenswert des Moduls multipliziert. Ein Beispiel für ein System von Softwarekomponenten und Softwaremodulen ist in Fig. 5 schematisch dargestellt. Im Beispiel sind fünf Softwaremodule $M_1...M_5$ vorhanden, die Sensordaten oder Analyseergebnisse von einer Umgebungssensorik 42 empfangen. Für jedes Soft-

waremodul $M_1...M_5$ ermittelt eine zugehörige Softwarekomponente $S_1...S_5$ eine Verlässlichkeit des jeweiligen Software-moduls $M_1...M_5$. Dabei können die Softwaremodule $M_1...M_5$ und die jeweils zugehörigen Softwarekomponenten $S_1...S_5$ eine Einheit bilden, wie es in Fig. 5 angedeutet ist. Aus der jeweiligen Modulverlässlichkeit sowie aus den entsprechenden Werten vorheriger Arbeitsschritte werden Gesamtwerte $\alpha_1...\alpha_5$ für die aktuelle Verlässlichkeit der Modulergebnisse $E_1...E_5$ ermittelt. Die Ergebnisse $E_1...E_5$ der Softwaremodule $M_1...M_5$ und die ermittelten Verlässlichkeiten $\alpha_1...\alpha_5$ werden an eine Komponente 20 zum Auflösen einer Redundanz weitergegeben.

Inhaltlich sagt die zu berechnende Verlässlichkeit $\alpha_1...\alpha_5$ aus, wie verlässlich, d. h. wenig unsicher, die aktuelle Ausgabegröße für die gegebenen aktuellen Eingangsgrößen und die gegebene jüngste Vergangenheit ist. Dazu werden zur Laufzeit verschiedene Messungen oder Untersuchungen vorgenommen. Die Messungen werden durch parallel zum aktiven Modul $M_1...M_5$ aufgehängte Softwarekomponenten $S_1...S_5$ zu jedem redundant auftretenden Verarbeitungsmo-dul $M_1...M_5$ durchgeführt und arbeiten unabhängig voneinander. Sie liefern Zahlen bzw. vektorwertige Ergebnisse $\alpha_1...\alpha_5$, die die Verlässlichkeit der aktuellen Modulausgabe $E_1...E_5$ aus verschiedenen Blickrichtungen bewerten. Aufgrund des hohen Berechnungsaufwandes kann es sinnvoll sein, die Verlässlichkeit nicht in jedem Zeitschritt zu berechnen. In diesem Fall bleibt die zuletzt berechnete Verlässlichkeit erhalten. Für die Messungen stehen unterschiedliche Ansätze zur Verfügung.

Beispielsweise kann durch leichtes Variieren bzw. Stören der Eingangsgrößen die Stabilität der Modulentscheidung gegenüber leichter Varianz der Eingangsgrößen gemessen werden. Für diese Messung können die Eingangsgrößen z. B. mit Rauschen überlagert werden.

Durch leichtes Variieren des Moduls $M_1...M_5$ kann die Stabilität der Modulentscheidung gegenüber leichten Modellvarianzen gemessen werden. Beispiele für das Variieren des Moduls $M_1...M_5$ sind Monte Carlo Dropouts [1] zur Laufzeit oder leichtes Verändern der Modellgewichte bei neuronalen Netzen oder Support Vector Machines (Stützvektormaschine; der deutsche Begriff ist allerdings ungebräuchlich). Beim Dropout wird eine spezifizierte Anzahl von Neuronen in jeder Schicht eines neuronalen Netzes abgeschaltet und für den kommenden Berechnungsschritt nicht berücksichtigt.

Mithilfe von Plausibilisierungsmethoden können die ausschlaggebenden Bereiche der Eingangsgrößen ermittelt werden, die die aktuelle Modulentscheidung $E_1...E_5$ am stärksten geprägt haben. Beispiele für solche Plausibilisierungsmethoden sind Heatmapping ("Wärmebild"; Eine "Heatmap" ist eine Visualisierung einer Eingangsgröße, z. B. eines Eingangsbildes, die anzeigt, welche Merkmale der Eingangsgröße ein Machine Learning Model als wichtig für das Erzielen einer Klassifizierung erachtet.) [2], Lime [3] (Local interpretable model-agnostic explanations; Lokale, interpretierbare modell-agnostische Begründungen) oder Deep Taylor Decompositions [4] (Taylor Approximation tiefer neuronaler Netze). Die Konzentration dieses Bereiches, d. h. die Ausdehnung über die Eingangsgrößen oder Lokalität in den aktuellen Eingangsgrößen, kann für bestimmte Module $M_1...M_5$ Aussagen über die Verlässlichkeit des aktuellen Ergebnisses $E_1...E_5$ zulassen. Beispielsweise haben Schilderkennungen oder Vorfahrtsbestimmungen hoch-lokale Entscheidungsgrundlagen im Bild. Prädiktionsalgorithmen sollten Ihre Vorhersage auf bestimmte Objekte im Umfeldmodell sowie wenige Kontextvariablen konzentrieren.

Viele Module $M_1...M_5$ liefern "intrinsische" Konfidenzen, also eine Art Unsicherheitsbewertung der aktuellen Ausgabe. Diese Konfidenzen können wie Sensorkonfidenzen behandelt werden, wie sie praktisch jeder Sensor klassisch übermittelt, und liefern auch Indizien für eine Verlässlichkeit des aktuellen Ergebnisses. Hohe Konfidenzen sollten mit einer hohen Verlässlichkeit korrelieren. Sie können aber auch an einem Trainingsbias liegen, so dass die Konfidenzen mit Vorsicht zu betrachten sind. Im Falle von neuronalen Netzen ist die intrinsische Konfidenz oft eine Softmax-Interpretation des Ergebnisses als Wahrscheinlichkeit.

Alternativ können die Schätzungen der Verlässlichkeit auch offline, d. h. nicht zur Laufzeit im Fahrzeug, erzeugt werden. Dazu können mit einer oder mehrerer der oben beschriebenen Messungen alle möglichen Eingangsgrößen evaluiert und als Vektor über die Eingangsgrößen abgelegt werden. Diese können dann zur Laufzeit entsprechend der gegeben Eingangsgrößen ausgelesen und weitergegeben werden. Dieser Ansatz ist außerordentlich performant und bietet sich vor allem bei vergleichsweise kleinen Mengen möglicher Eingangsgrößen an.

Angepasst an den jeweiligen Anwendungsfall werden aus den ermittelten Werten der Modulverlässlichkeiten sowie aus den entsprechenden Werten vorheriger Arbeitsschritte nun Gesamtwerte $\alpha_1...\alpha_5$ für die aktuelle Verlässlichkeit der Modulergebnisse $E_1...E_5$ ermittelt. Diese werden gemeinsam mit den jeweiligen Modulergebnissen $E_1...E_5$ an die Vorrichtung 20 zur Ermittlung der Ergebnisverlässlichkeit weitergegeben.

Dazu werden die ermittelten Modulergebnisse $E_1...E_5$ verglichen und ihre Differenz bestimmt. Hierbei werden übereinstimmende Modulergebnisse $E_1...E_5$ zusammengefasst. Wann Modulergebnisse $E_1...E_5$ als übereinstimmend zu werten sind, kann angepasst an den jeweiligen Anwendungsfall definiert werden. Gegebenenfalls können auch hinreichend ähnliche Ergebnisse $E_1...E_5$ als übereinstimmend gewertet werden. Dies trifft vor allem auf Module $M_1...M_5$ zu, die einen "dense output" haben, d. h. "dichte" bzw. kontinuierliche Ausgangsgrößen, wie beispielsweise Bilder. In diesem Fall kann man eine Distanz zwischen den Ausgaben definieren und hinreichend nahe beieinanderliegende Ergebnisse $E_1...E_5$ als übereinstimmend werten. Hinreichend nahe liegen die Ergebnisse $E_1...E_5$, wenn ihr Abstand kleiner als ein definierter Schwellwert ist, wobei der Schwellwert vom Anwendungsfall abhängen kann. Für verschiedene Segmentierungs- oder Klassifikationsalgorithmen kann die Distanz zwischen den Ausgaben beispielsweise durch den Jaccard-Koeffizienten definiert sein. Um den Jaccard-Koeffizienten zweier Mengen zu berechnen, teilt man die Anzahl der gemeinsamen Elemente, d. h. die Schnittmenge, durch die Größe der Vereinigungsmenge. Der Jaccard-Koeffizient ist ein Maß für die Ähnlichkeit der Ergebnisse $E_1...E_5$.

Zu den sich ergebenden Ergebnissen $E_1...E_5$ wird eine konkrete Ausprägung als Repräsentant ausgewählt, typischerweise dasjenige Ergebnis $E_1...E_5$ mit der höchsten Verlässlichkeit $\alpha_1...\alpha_5$, und eine Ergebnisverlässlichkeit $v(E_1)...v(E_5)$ bestimmt. Diese liegt über dem Maximum der einzelnen Verlässlichkeitswerte $\alpha_1...\alpha_5$. Bei redundant auftretenden Modulen $M_1...M_5$, die das gleiche oder ein hinreichend ähnliches Ergebnis $E_1...E_5$ ausgeben, ist die Ergebnisverlässlichkeit dieses Ergebnisses $E_1...E_5$ ein aggregiertes Maß für die gemeinschaftliche Glaubwürdigkeit des Ergebnisses $E_1...E_5$ in Anbetracht aller dieses Ergebnis tragenden Module $M_1...M_5$. Sie ist eine gemeinsame Ausgangsgröße dieser Module $M_1...M_5$ für das aktuelle Ergebnis $E_1...E_5$ und vom gleichen Datentyp wie die einzelnen Verlässlichkeiten $\alpha_1...\alpha_5$. Die konkrete Formel zur Berechnung der Ergebnisverlässlichkeit kann neben den einzelnen Verlässlichkeiten $\alpha_1...\alpha_5$ auch fest definierte Glaubwürdigkeiten der Module $M_1...M_5$ einbeziehen. Sie ist vorzugsweise als feste arithmetische Formel gegeben.

Die ermittelten Ergebnisverlässlichkeiten werden nun zur Auflösung der Redundanz verwendet. Dabei wird typischerweise das Ergebnis $E_1...E_5$ mit der höchsten Ergebnisverlässlichkeit als korrekt eingestuft und den nachfolgenden Verarbeitungsmodulen übergeben. Zusätzlich kann bei Bedarf das Erreichen einer Mindestergebnisverlässlichkeit zur Bedingung gemacht werden. Die ermittelte Ergebnisverlässlichkeit kann als Eingangsgröße für die nachfolgenden Module verwendet werden. Für den Fall, dass die Verlässlichkeit $\alpha_1...\alpha_5$ nicht in jedem Zeitschritt berechnet wird, wird die Redundanz in kleinerer Frequenz aufgelöst als die Messungen durchgeführt werden. Die Auflösung der Redundanz wird dann bis zur nächsten Berechnung der Verlässlichkeit $\alpha_1...\alpha_5$ beibehalten.

Sollten verschiedene widersprüchliche Ergebnisse $E_1...E_5$ die gleiche größte Ergebnisverlässlichkeit aufweisen, kann unter den entsprechenden Ergebnissen $E_1...E_5$ nach einer festen Priorität der Module $M_1...M_5$ gewählt werden. Dabei überträgt das als glaubwürdigst geltende Modul $M_1...M_5$ sein Ergebnis $E_1...E_5$ mit der entsprechenden Ergebnisverlässlichkeit. Allerdings lassen sich auch alternative Ansätze der Redundanzauflösung umsetzen.

Beispielsweise werden im Rahmen eines Konstanzansatzes werden zu jedem Modul $M_1...M_5$ Aktivitätsparameter gemessen. Diese Aktivitätsparameter sagen aus, wie aktiv jedes Modul $M_1...M_5$ in der vorhergehenden Zeit war und beziehen Verlässlichkeit, Präzision und die Frage, wie häufig diesen Modulen $M_1...M_5$ vertraut wurde, mit ein. Dabei hat die unmittelbare Vergangenheit einen starken, die Langzeiterfahrung einen kleinen Einfluss. Aktive Module $M_1...M_5$ werden bei gleicher maximaler Ergebnisverlässlichkeit bevorzugt. Bei einem kontextspezifischen Ansatz wird die oben beschriebene Priorisierung redundant auftretender Module $M_1...M_5$ kontextspezifisch verändert, beispielweise abhängig von Ort, Zeit, Wetter, Verkehr oder Umgebung.

Im Rahmen eines extrinsisch-intrinsischen Ansatzes wird bei gleicher maximaler extrinsischer Verlässlichkeit dem Modul $M_1...M_5$ vertraut, das eine geringere intrinsische Unsicherheit ausleitet, d. h. eine höhere Konfidenz. Sollte auch diese gleich sein, so werden die Werte der unmittelbaren Vergangenheit genutzt

Eine alternative Form der Redundanzauflösung beruht auf einem Verechnungsansatz. Sind die Ergebnisse $E_1...E_5$ interpolierbar, so wird anhand der vorhandenen Ergebnisse $E_1...E_5$ ein Gesamtergebnis als Interpolation der Modulergebnisse $E_1...E_5$ ermittelt. Dabei erhalten die Einzelergebnisse $E_1...E_5$ ein zur Ergebnisverlässlichkeit proportionales Gewicht. Auf diese Weise tragen Ergebnisse $E_1...E_5$ mit hoher Ergebnisverlässlichkeit mit einem größeren Gewicht zum Gesamtergebnis bei.

Ein Beispiel für das Bestimmen eines Gesamtergebnisses aus den Einzelergebnissen $E_1$, $E_2$ zweier Module $M_1$, $M_2$ ist in Fig. 6 dargestellt. Im Rahmen des Aufbaus eines Verständnisses für das Umfeld muss vom Fahrzeug eine sogenannte Freifelderkennung durchgeführt werden, also eine Bewertung desjenigen Raumes, in den gefahrlos gefahren werden kann. Diese Erkennung kann nun durch verschiedene Module $M_1$, $M_2$ basierend auf den Daten der Umgebungssensorik 42 durchgeführt werden.

Im Beispiel verarbeitet Modul $M_1$ vorverarbeitete Informationen anderer Module, die in Fig. 6 zu einem Vorverarbeitungsmodul VM zusammengefasst sind. Beispielsweise können von einer Objekterkennung Objektdaten OBJ, von einer Tiefenschätzung eine Tiefenkarte TK und von einer semantischen Segmentierung Segmentierungsdaten SEG bereitgestellt werden. Die genannten Module werden hier als virtuelle Sensoren aufgefasst, deren Ausgangsgrößen von $M_1$ als Eingangsgrößen genutzt werden.

Modul $M_2$ basiert hingegen auf einer Sensorfusion von Kamera, Radar und Lidar. Natürlich sind auch weitere Module denkbar, die alle zeitgleich eine Messung des Freiraums vornehmen.

Die Module $M_1$ und $M_2$ stellen ein redundantes Messsystem zur Ermittlung des Freiraumes dar. Sie werden im Allgemeinen kein eindeutiges Ergebnis $E_1$, $E_2$ ermitteln, insbesondere bei datengetriebenen Modulen, die durch Machine Learning entstanden sind. Es soll nun ermittelt werden, welchem Modul $M_1$, $M_2$ am stärksten zu Vertrauen ist, welches Ergebnis $E_1$, $E_2$ also die höchste Verlässlichkeit $\alpha_1$, $\alpha_2$ aufweist.

Dazu wird für jedes Modul $M_1$, $M_2$ neben seinem eigentlichen Messergebnis $E_1$, $E_2$, d. h. dem ermittelten Freiraum, zusätzlich eine Verlässlichkeit $\alpha_1$, $\alpha_2$ ermittelt. Die Verlässlichkeit $\alpha_1$, $\alpha_2$ gibt darüber Aussage, wie vertrau-

enswürdig dieses aktuelle Messergebnis $E_1$, $E_2$ für dieses Modul $M_1$, $M_2$ ist. Dieser Wert ist neben dem Messergebnis $E_1$, $E_2$ eine zweite Ausgangsgröße eines jeden Moduls $M_1$, $M_2$.

Bei abweichenden Messergebnissen $E_1$, $E_2$ wird typischerweise das Messergebnis $E_1$, $E_2$ mit der höheren Verlässlichkeit $\alpha_1$, $\alpha_2$ genutzt werden. Liefern hingegen beide Module $M_1$, $M_2$ das gleiche oder ein hinreichend ähnliches Ergebnis, so muss dieses Ergebnis als verlässlicher eingestuft werden. Die Module $M_1$ und $M_2$ liefern das gleiche Ergebnis E mit den Verlässlichkeiten $\alpha_1$ und $\alpha_2$. Dann ist ein Ansatz für die Ergebnisverlässlichkeit von E einfach die Summe $\alpha_1 + \alpha_2$.

Für viele Anwendungen ist es sinnvoll, wenn die Verlässlichkeiten immer Werte zwischen 0 und 1 oder Vektoren solcher Werte sind. In diesem Fall kann die Ergebnisverlässlichkeit des Ergebnisses E berechnet werden als

$$v(\mathrm{E}) = 1 - (1 - \alpha_1)(1 - \alpha_2) \cdot \ldots \cdot (1 - \alpha_n) = 1 - \prod_{i=1}^{n}(1 - \alpha_i), \qquad (1)$$

wenn die Module $M_1 \ldots M_n$ das gleiche Ergebnis E mit Verlässlichkeit $\alpha_1 \ldots \alpha_n$ ermittelt haben.

Alternativ kann die Glaubwürdigkeit $c(M_i)$ der Module mittels der Formel

$$v(\mathrm{E}) = 1 - (1 - c(\mathrm{M}_1)\alpha_1)(1 - c(\mathrm{M}_2)\alpha_2) \cdot \ldots \cdot (1 - c(\mathrm{M}_n)\alpha_n)$$

$$= 1 - \prod_{i=1}^{n}(1 - c(\mathrm{M}_i)\alpha_i), \qquad (2)$$

berücksichtigt werden.

Im Falle von vektoriellen Verlässlichkeitswerten sind die Formeln als komponentenweise Formeln zu verstehen, also beispielsweise

$$v(\mathrm{E})_j = 1 - \prod_{i=1}^{n}\big(1 - c(\mathrm{M}_i) \cdot (\alpha_i)_j\big), \qquad (3)$$

wobei $v(\mathrm{E})_j$ den $j$-ten Eintrag des Vektors der Ergebnisverlässlichkeit des Ergebnisses E bezeichnet und $(\alpha_i)_j$ der $j$-te Eintrag die aktuelle Verlässlichkeit des Moduls $M_i$ ist.

**Bezugszeichenliste**

| | |
|---|---|
| 10 | Empfangen von Ergebnissen |
| 11 | Ermitteln von Verlässlichkeiten |
| 12 | Bestimmen eines Gesamtergebnisses |
| 13 | Ausgeben des Gesamtergebnisses |
| 20 | Vorrichtung |
| 21 | Eingang |
| 22 | Empfangseinheit |
| 23 | Prozessoreinheit |
| 24 | Ausgabeeinheit |
| 25 | Kontrolleinheit |
| 26 | Ausgang |
| 27 | Speicher |
| 28 | Benutzerschnittstelle |
| 30 | Vorrichtung |
| 31 | Speicher |
| 32 | Prozessor |
| 33 | Eingang |
| 34 | Ausgang |

| 40 | Kraftfahrzeug |
| 41 | Navigationssystem |
| 42 | Umgebungssensorik |
| 43 | Netzwerk |
| 44 | Speicher |
| 45 | Fahrerassistenzsystem |
| $\alpha_1...\alpha_5$ | Verlässlichkeit |
| $E_1...E_5$ | Ergebnis |
| $M_1...M_5$ | Modul |
| $S_1...S_5$ | Softwarekomponente |
| OBJ | Objektdaten |
| SEG | Segmentierungsdaten |
| TK | Tiefenkarte |
| VM | Vorverarbeitungsmodul |

**Referenzen**

[1] Gal et al.: "Dropout as a Bayesian approximation: representing model uncertainty in deep learning", Proceedings of the 33rd International Conference on Machine Learning (ICML'16), Vol. 48 (2016), pp. 1050-1059.

[2] www.heatmapping.org

[3] Ribeiro et al.: ""Why Should I Trust You?": Explaining the Predictions of Any Classifier", Proceedings of the 22nd ACM SIGKDD International Conference on Knowledge Discovery and Data Mining (KDD '16) (2016), pp. 1135-1144.

[4] Montavon et al.: "Explaining nonlinear classification decisions with deep Taylor decomposition", Pattern Recognition, Vol. 65 (2017), pp. 211-222.

**Patentansprüche**

1. Verfahren zum Auflösen einer Redundanz von zwei oder mehr redundanten Modulen ($M_1...M_5$), mit den Schritten:

   - Empfangen (10) von Ergebnissen der zwei oder mehr redundanten Module ($M_1...M_5$);
   - Bestimmen (12) eines Gesamtergebnisses aus den Ergebnissen; und
   - Ausgeben (13) des Gesamtergebnisses für eine Weiterverarbeitung;

   **dadurch gekennzeichnet, dass**
   die Module ($M_1...M_5$) datengetrieben trainiert sind und durch Messungen oder Untersuchungen an den Modulen ($M_1...M_5$) Verlässlichkeiten der Ergebnisse ermittelt (11) werden, wobei das Bestimmen (12) des Gesamtergebnisses aus den Ergebnissen basierend auf den ermittelten Verlässlichkeiten erfolgt und aus den Verlässlichkeiten der Ergebnisse eine Ergebnisverlässlichkeit für das Gesamtergebnis ermittelt und ausgegeben wird (13).

2. Verfahren gemäß Anspruch 1, wobei als Gesamtergebnis dasjenige Ergebnis mit der höchsten Verlässlichkeit ausgegeben (13) wird.

3. Verfahren gemäß Anspruch 1 oder 2, wobei die Verlässlichkeit des Ergebnisses eines Moduls ($M_1...M_5$) auf Grundlage zumindest eines der folgenden Indikatoren ermittelt (11) wird: eine Robustheit des Moduls ($M_1...M_5$) gegenüber Veränderungen an den Eingangsgrößen; eine Robustheit des Moduls ($M_1...M_5$) gegenüber Veränderungen von Modulparametern; eine Lokalität von Entscheidungsgrundlagen des Moduls ($M_1...M_5$); ein vom Modul ($M_1...M_5$) in einem vorherigen Zeitschritt ermitteltes Ergebnis; ein für das Modul ($M_1...M_5$) in einem vorherigen Zeitschritt ermittelter Indikator.

4. Verfahren gemäß einem der vorherigen Ansprüche, wobei beim Ermitteln (11) der Verlässlichkeiten der Ergebnisse Gesamtverlässlichkeiten der zwei oder mehr redundanten Module ($M_1...M_5$) ermittelt werden.

**5.** Verfahren gemäß Anspruch 2, wobei bei zwei oder mehr Ergebnissen mit der höchsten Verlässlichkeit eine Priorisierung der zwei oder mehr redundanten Module ($M_1$...$M_5$) berücksichtigt wird.

**6.** Verfahren gemäß Anspruch 5, wobei die Priorisierung der zwei oder mehr redundanten Module ($M_1$...$M_5$) kontextspezifisch anpassbar ist.

**7.** Verfahren gemäß Anspruch 2, wobei Aktivitätsparameter der zwei oder mehr redundanten Module ($M_1$...$M_5$) gemessen werden und bei zwei oder mehr Ergebnissen mit der höchsten Verlässlichkeit aktive Module beim Bestimmen (12) des Gesamtergebnisses bevorzugt werden.

**8.** Verfahren gemäß Anspruch 2, wobei intrinsische Unsicherheiten der zwei oder mehr redundanten Module ($M_1$...$M_5$) erfasst werden und bei zwei oder mehr Ergebnissen mit der höchsten Verlässlichkeit Module mit geringerer intrinsischer Unsicherheit beim Bestimmen (12) des Gesamtergebnisses bevorzugt werden.

**9.** Verfahren gemäß Anspruch 1, wobei das Gesamtergebnis durch eine zu den ermittelten Verlässlichkeiten proportionale Interpolierung der Ergebnisse bestimmt (12) wird.

**10.** Computerlesbares Speichermedium mit Instruktionen, die bei Ausführung durch einen Computer den Computer zur Ausführung der Schritte eines Verfahrens gemäß einem der Ansprüche 1 bis 9 zum Auflösen einer Redundanz von Entscheidungen von zwei oder mehr redundanten Modulen ($M_1$...$M_5$) veranlassen.

**11.** Vorrichtung (20) zum Auflösen einer Redundanz von zwei oder mehr redundanten Modulen ($M_1$...$M_5$), mit:

- einer Empfangseinheit (22) zum Empfangen (10) von Ergebnissen der zwei oder mehr redundanten Module ($M_1$...$M_5$);
- einer Prozessoreinheit (23) zum Bestimmen (12) eines Gesamtergebnisses aus den Ergebnissen; und
- einer Ausgabeeinheit (24) zum Ausgeben (13) des Gesamtergebnisses für eine Weiterverarbeitung;

**dadurch gekennzeichnet, dass**
die Module ($M_1$...$M_5$) datengetrieben trainiert sind, die Prozessoreinheit (23) eingerichtet ist, durch Messungen oder Untersuchungen an den Modulen ($M_1$...$M_5$) für die Ergebnisse ermittelte (11) Verlässlichkeiten beim Bestimmen (12) des Gesamtergebnisses aus den Ergebnissen zu berücksichtigen und aus den Verlässlichkeiten der Ergebnisse eine Ergebnisverlässlichkeit für das Gesamtergebnis zu ermitteln, und die Ausgabeeinheit (24) eingerichtet ist, die ermittelte Ergebnisverlässlichkeit zusätzlich zum Gesamtergebnis für eine Weiterverarbeitung auszugeben (13).

**Claims**

**1.** Method for resolving a redundancy of two or more redundant modules ($M_1$...$M_5$), comprising the steps of:

- receiving (10) results of the two or more redundant modules ($M_1$...$M_5$);
- determining (12) an overall result from the results; and
- outputting (13) the overall result for further processing;

**characterized in that**
the modules ($M_1$...$M_5$) are trained in a data-driven manner and reliabilities of the results are ascertained (11) by means of measurements or investigations on the modules ($M_1$...$M_5$), wherein the determination (12) of the overall result from the results takes place based on the ascertained reliabilities, and a result reliability is ascertained for the overall result from the reliabilities of the results and is output (13).

**2.** Method according to Claim 1, wherein the result having the highest reliability is output (13) as the overall result.

**3.** Method according to Claim 1 or 2, wherein the reliability of the result of a module ($M_1$...$M_5$) is ascertained (11) on the basis of at least one of the following indicators: a robustness of the module ($M_1$...$M_5$) with respect to changes to the input values; a robustness of the module ($M_1$...$M_5$) with respect to changes in module parameters; a locality of decision bases of the module ($M_1$...$M_5$); a result ascertained by the module ($M_1$...$M_5$) in a previous time step; an indicator ascertained for the module ($M_1$...$M_5$) in a previous time step.

4. Method according to one of the preceding claims, wherein, when ascertaining (11) the reliabilities of the results, overall reliabilities of the two or more redundant modules ($M_1...M_5$) are ascertained.

5. Method according to Claim 2, wherein, in the case of two or more results having the highest reliability, a prioritization of the two or more redundant modules ($M_1...M_5$) is considered.

6. Method according to Claim 5, wherein the prioritization of the two or more redundant modules ($M_1...M_5$) is adjustable in a context-specific manner.

7. Method according to Claim 2, wherein activity parameters of the two or more redundant modules ($M_1...M_5$) are measured, and, in the case of two or more results having the highest reliability, active modules are preferred when determining (12) the overall result.

8. Method according to Claim 2, wherein intrinsic uncertainties of the two or more redundant modules ($M_1...M_5$) are detected, and, in the case of two or more results having the highest reliability, modules having lower intrinsic uncertainty are preferred when determining (12) the overall result.

9. Method according to Claim 1, wherein the overall result is determined (12) by means of an interpolation of the results which is proportional to the ascertained reliabilities.

10. Computer-readable storage medium having instructions which, in the case of execution by means of a computer, cause the computer to execute the steps of a method according to one of Claims 1 to 9 for resolving a redundancy of decisions of two or more redundant modules ($M_1...M_5$).

11. Apparatus (20) for resolving a redundancy of two or more redundant modules ($M_1...M_5$), comprising:

   - a receiving unit (22) for receiving (10) results of the two or more redundant modules ($M_1...M_5$);
   - a processor unit (23) for determining (12) an overall result from the results; and
   - an output unit (24) for outputting (13) the overall result for further processing;

   **characterized in that**
   the modules ($M_1...M_5$) are trained in a data-driven manner, the processor unit (23) is configured to consider reliabilities ascertained (11) for the results by means of measurements or investigations on the modules ($M_1...M_5$) when determining (12) the overall result from the results and to ascertain a result reliability for the overall result from the reliabilities of the results, and the output unit (24) is configured to output (13) the ascertained result reliability in addition to the overall result for further processing.

**Revendications**

1. Procédé permettant de résoudre une redondance de deux, ou plus, modules redondants ($M_1 ... M_5$), comprenant les étapes consistant à :

   - recevoir (10) des résultats des deux, ou plus, modules redondants ($M_1 ... M_5$) ;
   - déterminer (12) un résultat global à partir des résultats ; et
   - sortir (13) le résultat global pour un traitement ultérieur ;

   **caractérisé en ce que** les modules ($M_1 ... M_5$) sont entraînés à l'aide de données, et des fiabilités des résultats sont établies (11) par des mesures ou des analyses sur les modules ($M_1 ... M_5$), la détermination (12) du résultat global à partir des résultats étant effectuée sur la base des fiabilités établies, et une fiabilité résultante pour le résultat global étant établie à partir des fiabilités des résultats et sortie (13) .

2. Procédé selon la revendication 1, dans lequel le résultat qui présente la plus haute fiabilité est sorti (13) comme résultat global.

3. Procédé selon la revendication 1 ou 2, dans lequel la fiabilité du résultat d'un module ($M_1 ... M_5$) est établie (11) sur la base d'au moins l'un des indicateurs suivants : une robustesse du module ($M_1 ... M_5$) par rapport à des variations des grandeurs d'entrée ; une robustesse du module ($M_1 ... M_5$) par rapport à des variations de paramètres de module ; une localité des bases de décision du module ($M_1$ ... $M_5$) ; un résultat établi par le module ($M_1$ ... $M_5$) dans un incrément de temps précédent ; un indicateur établi pour le module ($M_1$ ... $M_5$) dans un incrément de temps précédent.

4. Procédé selon l'une quelconque des revendications précédentes, dans lequel des fiabilités globales des deux, ou plus, modules redondants ($M_1$ ... $M_5$) sont établies lors de l'établissement (11) des fiabilités des résultats.

5. Procédé selon la revendication 2, dans lequel pour deux, ou plus, résultats ayant la plus haute fiabilité, une priorisation des deux, ou plus, modules redondants ($M_1$ ... $M_5$) est prise en compte.

6. Procédé selon la revendication 5, dans lequel la priorisation des deux, ou plus, modules redondants ($M_1$ ... $M_5$) peut être adaptée en fonction du contexte.

7. Procédé selon la revendication 2, dans lequel des paramètres d'activité des deux, ou plus, paramètres d'activité des deux, ou plus, modules redondants ($M_1$ ... $M_5$) sont mesurés, et pour deux, ou plus, résultats avec la plus haute fiabilité, des modules actifs sont préférés lors de la détermination (12) du résultat global.

8. Procédé selon la revendication 2, dans lequel des incertitudes intrinsèques des deux, ou plus, modules redondants ($M_1$ ... $M_5$) sont détectées, et pour deux, ou plus, résultats avec la plus haute fiabilité, des modules ayant une incertitude intrinsèque inférieure sont préférés lors de la détermination (12) du résultat global.

9. Procédé selon la revendication 1, dans lequel le résultat global est déterminé (12) par une interpolation des résultats, proportionnelle aux fiabilités établies.

10. Support de stockage lisible par ordinateur, comprenant des instructions qui, lorsqu'elles sont exécutées par un ordinateur, ont pour effet que l'ordinateur exécute les étapes d'un procédé selon l'une quelconque des revendications 1 à 9 pour résoudre une redondance de décisions de deux, ou plus, modules redondants ($M_1$ ... $M_5$).

11. Dispositif (20) permettant de résoudre une redondance de deux, ou plus, modules redondants ($M_1$ ...$M_5$), comprenant :

 - une unité de réception (22) pour recevoir (10) des résultats des deux, ou plus, modules redondants ($M_1$ ... $M_5$) ;
 - une unité de processeur (23) pour déterminer (12) un résultat global à partir des résultats ; et
 - une unité de sortie (24) pour sortir (13) le résultat global pour un traitement ultérieur ;

**caractérisé en ce que** les modules ($M_1$ ... $M_5$) sont entraînés à l'aide de données, l'unité de processeur (23) est aménagée pour prendre en compte des fiabilités établies (11) par des mesures ou des analyses sur les modules ($M_1$ ... $M_5$) lors de la détermination (12) du résultat global à partir des résultats, et pour établir à partir des fiabilités des résultats une fiabilité résultante pour le résultat global, et l'unité de sortie (24) est aménagée pour sortir la fiabilité résultante établie en plus du résultat global pour un traitement ultérieur (13).

```
┌─────────────────────────┐
│   Empfangen von         │ ──── 10
│   Ergebnissen           │
└─────────────────────────┘
            │
            ▼
┌─────────────────────────┐
│   Ermitteln von         │ ──── 11
│   Verlässlichkeiten     │
└─────────────────────────┘
            │
            ▼
┌─────────────────────────┐
│   Bestimmen eines       │ ──── 12
│   Gesamtergebnisses     │
└─────────────────────────┘
            │
            ▼
┌─────────────────────────┐
│   Ausgeben des          │ ──── 13
│   Gesamtergebnisses     │
└─────────────────────────┘
```

FIG. 1

FIG. 2

EP 3 646 184 B1

FIG. 3

FIG. 4

FIG. 5

FIG. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008013366 A1
- WO 2014033172 A1

- WO 0180009 A2
- EP 0366017 A2

**In der Beschreibung aufgeführte Nicht-Patentliteratur**

- **GAL et al.** Dropout as a Bayesian approximation: representing model uncertainty in deep learning. *Proceedings of the 33rd International Conference on Machine Learning (ICML'16),* 2016, vol. 48, 1050-1059

- **RIBEIRO et al.** Why Should I Trust You?'': Explaining the Predictions of Any Classifier. *Proceedings of the 22nd ACM SIGKDD International Conference on Knowledge Discovery and Data Mining (KDD '16),* 2016, 1135-1144
- **MONTAVON et al.** Explaining nonlinear classification decisions with deep Taylor decomposition. *Pattern Recognition,* 2017, vol. 65, 211-222